(19) Europäisches Patentamt
European Patent Office
Office européen des brevets

(11) **EP 4 079 546 B1**

(12) **EUROPEAN PATENT SPECIFICATION**

(45) Date of publication and mention of the grant of the patent:
**11.03.2026 Bulletin 2026/11**

(21) Application number: **22163794.5**

(22) Date of filing: **23.03.2022**

(51) International Patent Classification (IPC):
**B60C 19/00** (2006.01)

(52) Cooperative Patent Classification (CPC):
**B60C 19/002**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2021 JP 2021072795**

(43) Date of publication of application:
**26.10.2022 Bulletin 2022/43**

(73) Proprietor: **Sumitomo Rubber Industries, Ltd.**
**Kobe-shi, Hyogo-ken 651-0072 (JP)**

(72) Inventor: **OKAMOTO, Jun**
**Kobe-shi, Hyogo, 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
**EP-A1- 3 321 108        EP-A1- 3 659 819**
**JP-A- 2021 046 127**

**Description**

BACKGROUND OF THE INVENTION

Field of the Invention

The present invention relates to a pneumatic tire.

Background Art

Japanese Laid-Open Patent Publication No. 2019-142503 suggests a pneumatic tire having a porous sound damper fixed to an inner cavity surface of a tread portion. The pneumatic tire is expected to reduce running noise through the sound damper. Further prior art tires are discussed in EP 3 659 819 A1, EP 3 321 108 A1 and JP 2021 046127 A.

In the pneumatic tire as described above, the sound damper tends to be separated from a tire inner cavity surface according to the running, and improvement has been required.

The present invention has been made in view of the aforementioned circumstances, and a main object of the present invention is to provide a pneumatic tire that can inhibit separation of a sound damper from a tire inner cavity surface over a long time period.

SUMMARY OF THE INVENTION

The above object is satisfied by a tire having the features of claim 1. The present invention is directed to a pneumatic tire including a tire inner cavity surface. A porous sound damper is fixed to the tire inner cavity surface via a fixing layer. A hardness Ga of the sound damper and a hardness Gb of the fixing layer satisfy the following expression (1).

$$|(Ga\text{-}Gb)/Ga+(Gb\text{-}Ga)/Gb|\leq10\ldots(1)$$

In the pneumatic tire of the present invention, the following expression (2) is preferably satisfied.

$$|(Ga\text{-}Gb)/Ga+(Gb\text{-}Ga)/Gb|\leq5\ldots(2)$$

In the pneumatic tire of the present invention, the following expression (3) is preferably satisfied.

$$|(Ga\text{-}Gb)/Ga+(Gb\text{-}Ga)/Gb|\leq1\ldots(3)$$

In the pneumatic tire of the present invention, the sound damper preferably has a width W1 in a tire axial direction, and the width W1/the hardness Gb is preferably not less than $1.1\times10^{-4}$.

In the pneumatic tire of the present invention, the width W1/the hardness Gb is preferably not less than $1.5\times10^{-4}$.

In the pneumatic tire of the present invention, the fixing layer preferably has a width W2 in the tire axial direction, and the width W2/the hardness Ga is preferably not less than $1.1\times10^{-4}$.

In the pneumatic tire of the present invention, the width W2/the hardness Ga is preferably not less than $1.5\times10^{-4}$.

In the pneumatic tire of the present invention, the hardness Ga is preferably higher than the hardness Gb.

In the pneumatic tire of the present invention, a difference between the hardness Ga and the hardness Gb is preferably less than $1.0\times10^4$ (Pa).

In the pneumatic tire of the present invention, an outer peripheral surface of the sound damper in a tire radial direction preferably includes a first portion that is fixed to the tire inner cavity surface via the fixing layer and a second portion that is not fixed to the tire inner cavity surface.

In the pneumatic tire of the present invention, a total area S1 of the first portion is preferably less than a total area S2 of the second portion.

In the pneumatic tire of the present invention, the total area S1 of the first portion/the hardness Gb is preferably not less than 0.3.

In the pneumatic tire of the present invention, the fixing layer preferably includes a center portion in the tire axial direction, and an end portion, in the tire axial direction, having a thickness greater than the center portion.

In the pneumatic tire of the present invention, a belt layer is preferably disposed in a tread portion, and an outer end of the fixing layer in the tire axial direction is preferably disposed tire-axially inward of an outer end of the belt layer in the tire axial direction.

In the pneumatic tire of the present invention, the fixing layer preferably has the width W2 in the tire axial direction, the belt layer preferably has a width W3 in the tire axial direction, and the width W2, the width W3, and the hardness Ga preferably satisfy the following expression (4).

$$(W3-W2)/Ga<1.0\times10^{-4}\ldots(4)$$

In the pneumatic tire of the present invention, the sound damper is fixed to the tread portion, and the width W1 of the sound damper in the tire axial direction is less than a distance in the tire radial direction from a bead base line to a maximum width position at an inner cavity surface of a sidewall portion in a normal state in which the tire is mounted on a normal rim and is inflated to a normal internal pressure and no load is applied to the tire.

The pneumatic tire of the present invention has the above-described configuration. Therefore, separation of the sound damper from the tire inner cavity surface can be inhibited over a long time period.

BRIEF DESCRIPTION OF THE DRAWINGS

FIG. 1 is a tire meridian cross-sectional view of a pneumatic tire according to one embodiment of the present invention;
FIG. 2 is an enlarged view of a tread portion shown in FIG. 1; and
FIG. 3 is an enlarged view of a tread portion according to another embodiment of the present invention.

DETAILED DESCRIPTION

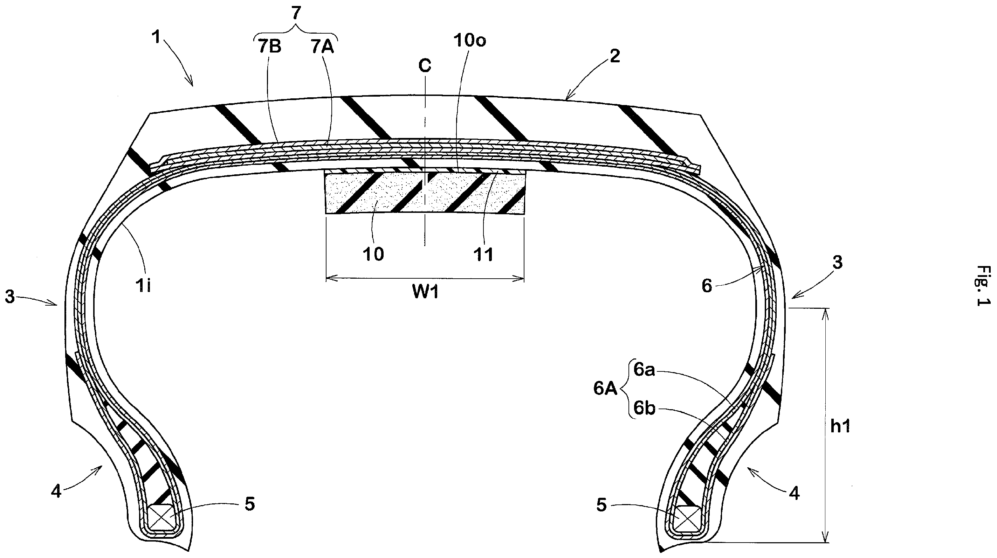

One embodiment of the present invention will be described below with reference to the drawings. FIG. 1 is a tire meridian cross-sectional view of a pneumatic tire (hereinafter, may be simply referred to as "tire") 1 in a normal state according to one embodiment of the present invention. In the present embodiment, the pneumatic tire 1 for a passenger car is described as a preferable mode. However, the present invention may be used as, for example, a pneumatic tire 1 for a motorcycle or a heavy duty pneumatic tire 1.

The "normal state" represents a state in which a tire is mounted on a normal rim and is inflated to a normal internal pressure and no load is applied to the tire, when the tire is a pneumatic tire for which various standards are defined. For tires for which various standards are not defined, the normal state represents a standard use state, corresponding to a purpose for which the tire is used, in which the tire is not mounted to a vehicle and no load is applied to the tire. In the description herein, unless otherwise specified, dimensions and the like of components of the tire are represented as values measured in the normal state.

The "normal rim" represents a rim that is defined by a standard, in a standard system including the standard on which the tire is based, for each tire, and is, for example, "standard rim" in the JATMA standard, "Design Rim" in the TRA standard, or "Measuring Rim" in the ETRTO standard.

The "normal internal pressure" represents an air pressure that is defined by a standard, in a standard system including the standard on which the tire is based, for each tire, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

As shown in FIG. 1, in the tire 1 of the present embodiment, conventional tire components such as a carcass 6 and a belt layer 7 are disposed. For the tire components, known components can be adopted as appropriate.

The carcass 6 extends from one of bead portions 4 through one of sidewall portions 3, a tread portion 2, the other of the sidewall portions 3 to the other of the bead portions 4. The carcass 6 has at least one carcass ply 6A. In the present embodiment, the carcass 6 has two carcass plies 6A. The carcass ply 6A is, for example, formed by covering an array of carcass cords with topping rubber. The carcass cords are disposed, for example, at an angle of 75 to 90° relative to the tire circumferential direction. To the carcass cords, for example, organic fibers such as polyester fibers, nylon fibers, rayon fibers, polyethylene naphthalate fibers, and aramid fibers are applied.

The carcass ply 6A includes, for example, a body portion 6a and turned-up portions 6b. The body portion extends from the tread portion 2 through the sidewall portions 3 to bead cores 5. Each turned-up portion 6b is continuous with the body portion 6a and is turned up around the bead core 5 from the inner side toward the outer side in the tire axial direction, and extends outwardly in the tire radial direction.

The belt layer 7 is disposed outward of the carcass 6 in the tire radial direction, at the tread portion 2. The belt layer 7 includes at least one belt ply. In the present embodiment, the belt layer 7 includes two belt plies 7A and 7B. The belt plies 7A and 7B are, for example, each formed by covering an array of belt cords with topping rubber.

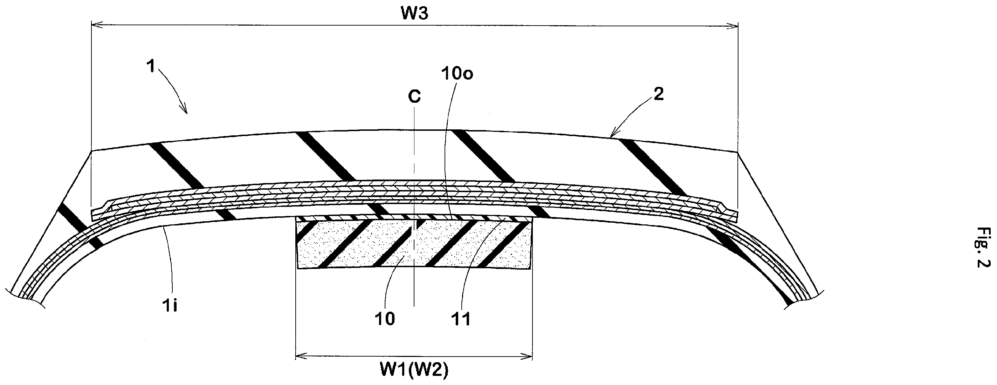

FIG. 2 is an enlarged view of the tread portion 2. As shown in FIG. 2, a porous sound damper 10 is fixed via a fixing layer 11 to a tire inner cavity surface 1i at the tread portion 2. In the tire, the sound damper 10 can absorb vibration of air and contributes to reduction of noise generated by the tire during running. In FIG. 2, the fixing layer 11 is shown so as to be thicker than an actual one in order to make the invention easily understood.

The sound damper 10 has a hardness Ga. The fixing layer 11 has a hardness Gb. In the description herein, the hardness Ga and the hardness Gb each represent a storage modulus of each component, and can be, for example, measured in the method specified in JIS K7244.

In the present embodiment, the hardness Ga and the hardness Gb are each measured by collecting and using each component having a thickness of 1 mm as a sample. As the measurement method, a method in which the sample is placed between parallel plates of ARES, manufactured by TA Instruments, having $\varphi$7.9 mm parallel plates mounted thereto, the temperature is increased to 50°C, the stabilization of normal force is thereafter confirmed, and the storage modulus is measured under a condition in which the temperature is 30°C, the angular frequency is 10 Hz, and the dynamic strain is ±2%, is used.

In a case where it is difficult to collect a sample of the fixing layer 11 having a thickness of 1 mm, small pieces of the fixing layer 11 which can be collected may be collected and stacked to produce the sample.

In the present invention, the hardness Ga of the sound damper 10 and the hardness Gb of the fixing layer 11 satisfy the following expression (1). Thus, in the present invention, separation of the sound damper 10 from the tire inner cavity surface 1i can be inhibited over a long time period. The following mechanism is assumed as the reason.

$$|(Ga-Gb)/Ga+(Gb-Ga)/Gb|\leq10\ldots(1)$$

In a pneumatic tire having a conventional sound damper, a sound damper formed of a relatively soft material such as urethane foam is fixed to a tire inner cavity surface via a fixing layer formed of a curable adhesive material in many cases. In such a mode, the sound damper is likely to be separated. This is because, since difference in hardness between the sound damper and the fixing layer is great, stress concentration may occur between the sound damper and the fixing layer.

Therefore, in order to address the aforementioned problem, the difference in hardness between the sound damper and the fixing layer may be preferably reduced. Meanwhile, various materials can be adopted for the sound damper and the fixing layer. The fixing layer is a cured product of an adhesive in some cases and an adhesive tape in other cases. Furthermore, the sound damper 10 is a porous product that absorbs vibration of air. Therefore, it is difficult to uniquely define the difference in hardness between the sound damper and the fixing layer.

The inventors have found as a result of thorough studies that the difference in hardness between the sound damper 10 and the fixing layer 11 can be uniquely defined according to expression (1) described above, to complete the present invention. In the present invention, it is considered that, when the difference between the hardness Ga of the sound damper 10 and the hardness Gb of the fixing layer 11 satisfy expression (1), stress concentration between the sound damper 10 and the fixing layer 11 is unlikely to occur and separation of the sound damper 10 can be inhibited.

The configurations of the present embodiment will be described below in more detail. The configurations described below represent a specific mode of the present embodiment. Therefore, it is needless to say that the present invention can exhibit the above-described effect even when the configurations described below are not provided. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to the configurations can be expected. The dimensions of the respective components described below represent dimensions in a state where the tire is not mounted on a rim, a distance between the two bead cores 5 (shown in FIG. 1) is equal to that in the normal state, and no load is applied.

In order to further enhance the above-described effect, the hardness Ga of the sound damper 10 and the hardness Gb of the fixing layer 11 preferably satisfy the following expression (2) and more preferably satisfy the following expression (3).

$$|(Ga-Gb)/Ga+(Gb-Ga)/Gb|\leq5\ldots(2)$$

$$|(Ga-Gb)/Ga+(Gb-Ga)/Gb|\leq1\ldots(3)$$

As the sound damper 10, synthetic resin sponges such as ether-based polyurethane sponges, ester-based polyurethane sponges, and polyethylene sponges, and rubber sponges such as chloroprene rubber sponges (CR sponges), ethylene-propylene rubber sponges (EPDM sponges), and nitrile rubber sponges (NBR sponges) can be preferably used. Among them, polyurethane sponges including ether-based polyurethane sponges are preferable from the viewpoint of sound-damping properties, light weight, foam controllability, durability, or the like.

A width W1 of the sound damper 10 in the tire axial direction is, for example, 60 to 100 mm and preferably 70 to 90 mm. The thickness of the sound damper 10 is, for example, 25 to 50 mm and preferably 30 to 40 mm. However, the dimensions of the sound damper 10 are not limited to such dimensions.

In the present embodiment, the width W1 of the sound damper 10 in the tire axial direction is less than a distance h1 in the tire radial direction from a bead base line to the maximum width position at the inner cavity surface of the sidewall portion 3 in the normal state. The bead base line represents a line extending, in the tire axial direction, through a rim diameter position defined by the standard on which the tire is based.

The inventors have found as a result of various experiments that a noise reducing effect can be sufficiently exhibited by the sound damper 10 also in a case where the width W1 of the sound damper 10 is less than the distance h1 in the tire radial direction. In the present invention, the width W1 of the sound damper 10 is defined as being less than the distance h1 in the tire radial direction, whereby noise can be sufficiently reduced while increase of the weight of the tire due to the sound damper 10 is minimized.

From the viewpoint of enhancing noise performance while increase of the weight of the tire is inhibited, the width W1 of the sound damper 10 is not less than 70% of the distance h1 in the tire radial direction, more preferably not less than 75% thereof, and even more preferably not less than 80% thereof, and preferably not greater than 95% thereof and more preferably not greater than 90% thereof.

The hardness Ga of the sound damper 10 is, but is not limited to, for example, $3.0 \times 10^3$ (Pa) to $5.0 \times 10^7$ (Pa). The sound damper 10 having such a structure can be manufactured through a known method.

The fixing layer 11 of the present embodiment is formed of a cured product of an adhesive. However, the present invention is not limited thereto. The fixing layer 11 may be formed of a pressure-sensitive adhesive having adhesiveness. Furthermore, the fixing layer 11 may be formed as a double-sided tape.

Examples of the pressure-sensitive adhesives and adhesives that can be used for the fixing layer 11 include inorganic pressure-sensitive adhesives (adhesives) and organic pressure-sensitive adhesives (adhesives). Examples of the inorganic pressure-sensitive adhesives (adhesives) include sodium silicate, cement, and ceramics. Examples of the organic pressure-sensitive adhesives (adhesives) include natural and synthetic (thermoplastic resin-based, thermosetting resin-based, elastomer-based, etc.) pressure-sensitive adhesives (adhesives). Examples of the natural pressure-sensitive adhesives (adhesives) include starch-based, protein-based, and natural rubber-based pressure-sensitive adhesives (adhesives), and asphalt. Examples of the thermoplastic resin-based pressure-sensitive adhesives (adhesives) include vinyl acetate resin-based, polyvinyl acetal-based, ethylene vinyl acetate resin-based, vinyl chloride resin-based, acrylic resin-based (for example, acrylic esters such as butyl acrylate), polyamide-based, cellulose-based, and $\alpha$-olefin-based pressure-sensitive adhesives (adhesives). Examples of the thermosetting resin-based pressure-sensitive adhesives (adhesives) include urea resin-based, melamine resin-based, phenol resin-based, resorcinol resin-based, epoxy resin-based, structural acrylic resin-based, polyester-based, and polyaromatic-based pressure-sensitive adhesives (adhesives). Examples of the elastomer-based pressure-sensitive adhesives (adhesives) include chloroprene-based, nitrile rubber-based, styrene-butadiene rubber-based, polysulfide-based, isobutylene-isoprene-rubber-based, silicone rubber-based, acrylic rubber-based, modified silicone rubber-based, urethane rubber-based, silylated urethane resin-based, telechelic polyacrylate-based, and cyanoacrylate-based pressure-sensitive adhesives (adhesives).

The double-sided tape that can be used for the fixing layer 11 includes a sheet-like base, and a pressure-sensitive adhesive adhered to both surfaces of the base. As the base, for example, plastic films made of polyethylene, polypropylene, polyvinyl chloride, polyester (polyethylene terephthalate, etc.), and the like, rayon, pulp, synthetic fibers, woven fabrics, nonwoven fabrics, cotton fabrics, foam material sheets (acrylic foam using a foaming agent, etc.) made of acrylate and plastic, metals (aluminum, copper, etc.), etc., are suitably used. As the pressure-sensitive adhesive, the above-described pressure-sensitive adhesive can be used.

The hardness Gb of the fixing layer 11 is, but is not limited to, for example, $3.0 \times 10^3$ (Pa) to $2.0 \times 10^7$ (Pa). The fixing layer 11 having such a structure can be manufactured through a known method.

In the present invention, as long as expression (1) is satisfied, either the hardness Ga or the hardness Gb may be higher. That is, the hardness Ga may be higher than the hardness Gb, or the hardness Ga may be less than the hardness Gb.

A difference between the hardness Ga and the hardness Gb is preferably not greater than $1.0 \times 10^4$ (Pa) and more preferably not greater than $0.5 \times 10^4$ (Pa).

In the present embodiment, the outer end of the fixing layer 11 in the tire axial direction is preferably disposed tire-axially inward of the outer end of the belt layer 7 in the tire axial direction. Thus, the sound damper 10 is disposed within a region obtained by imaginarily extending the belt layer 7 inwardly in the tire radial direction, and separation of the sound damper 10 becomes difficult.

In the present embodiment, a width W2 of the fixing layer 11 in the tire axial direction is equal to the width W1 of an outer peripheral surface 10o of the sound damper 10 in the tire axial direction. Thus, the fixing layer 11 is not exposed at the tire inner cavity surface 1i, and adhesion of dust or the like can be prevented. However, the width W2 of the fixing layer 11 in the tire axial direction may be, for example, greater than the width W1 of the outer peripheral surface 10o of the sound damper 10 in the tire axial direction. In such a mode, when the tire is manufactured, the sound damper 10 can be easily fixed to the tire inner cavity surface 1i.

In the present embodiment, the entirety of the outer peripheral surface 10o of the sound damper 10 in the tire radial direction is fixed to the tire inner cavity surface 1i via the fixing layer 11. Thus, the sound damper 10 is assuredly fixed.

In the present embodiment, regarding the width W1 (mm) of the sound damper 10 and the hardness Gb (Pa) of the fixing layer 11, the width W1/the hardness Gb (mm/Pa) is preferably not less than $1.1 \times 10^{-4}$ and more preferably not less than $1.5 \times 10^{-4}$, and preferably not greater than $3.0 \times 10^{-2}$ and more preferably not greater than $5.0 \times 10^{-3}$. Thus, the width of the sound damper 10 can be appropriately assured, and excellent noise performance is exhibited while the above-described separation is inhibited.

From a similar viewpoint, regarding the width W2 (mm) of the fixing layer 11 and the hardness Ga (Pa) of the sound damper 10, the width W2/the hardness Ga (mm/Pa) is preferably not less than $1.1 \times 10^{-4}$ and more preferably not less than $1.5 \times 10^{-4}$, and preferably not greater than $3.0 \times 10^{-2}$ and more preferably not greater than $5.0 \times 10^{-3}$.

In a more preferable mode, in the present embodiment, the width W2 (mm) of the fixing layer 11, a width W3 (mm) of the belt layer 7 in the tire axial direction, and the hardness Ga (Pa) of the sound damper 10 satisfy the following expression (4). Thus, the width of the fixing layer 11 is sufficiently assured, and separation of the sound damper 10 is assuredly inhibited.

$$(W3\text{-}W2)/Ga < 1.0 \times 10^{-4} \ldots (4)$$

In the present embodiment, for example, the fixing layer 11 has a constant thickness over the entire surface. Thus, stress concentration is unlikely to occur, and separation of the sound damper 10 is further inhibited. In another embodiment, the thickness of the fixing layer 11 may vary in the tire axial direction. In this case, the fixing layer 11 preferably includes the center portion in the tire axial direction and end portions, in the tire axial direction, having thicknesses greater than the center portion. Deformation of the tread portion 2 is increased at a portion distant from the tire equator C. Therefore, increase of the thickness of the end portion of the fixing layer 11 can further inhibit separation of the sound damper 10.

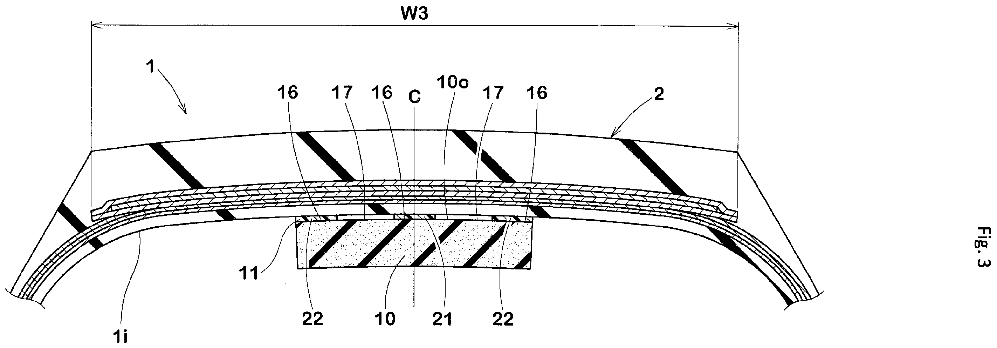

FIG. 3 is an enlarged cross-sectional view of the tread portion 2 according to another embodiment of the present invention. In the present embodiment, the outer peripheral surface 10o of the sound damper 10 in the tire radial direction includes a first portion 16 fixed to the tire inner cavity surface 1i via the fixing layer 11 and a second portion 17 that is not fixed to the tire inner cavity surface 1i. In this embodiment, the volume of the fixing layer 11 can be reduced, increase of the weight of the tire can be inhibited, and heat dissipation properties can be maintained on the tire inner cavity surface 1i side of the tread portion 2.

The first portions 16 are disposed at least on both end portions of the sound damper 10 in the tire axial direction. In a more preferable mode, the first portion 16 is also disposed at the center portion of the sound damper 10 in the tire axial direction. Thus, the above-described effect can be obtained while the sound damper 10 is assuredly fixed.

For example, the first portion 16 continuously extends over the entire circumference of the tire such that the sound damper 10 is unlikely to be separated. However, the present invention is not limited thereto. The first portions 16 may be disposed at intervals in the tire circumferential direction. Thus, increase of the weight of the tire can be further inhibited.

A total area S1 of the first portions 16 is 10% to 40% of the total area of the outer peripheral surface 10o of the sound damper 10 in the tire radial direction. The total area S1 of the first portions 16 is preferably less than a total area S2 of the second portions 17. A ratio S1/S2 of the total area S1 to the total area S2 is, for example, 0.2 to 0.6. Thus, separation of the sound damper 10 can be inhibited while the weight of the tire is maintained.

In the present embodiment, regarding the total area S1 ($mm^2$) and the hardness Gb (Pa), the total area S1/the hardness Gb ($mm^2$/Pa) is preferably not less than 0.3 and more preferably not less than 3.0 and preferably not greater than 40.0 and more preferably not greater than 30.0. Thus, the total area S1 of the first portions 16 is appropriate, and separation of the sound damper 10 is more assuredly inhibited while increase of the weight of the tire is inhibited.

In the present embodiment, the fixing layer 11 includes a center portion 21 in the tire axial direction and end portions 22 in the tire axial direction. In the present embodiment, the thickness thereof is constant. However, the present invention is not limited thereto. For example, the thicknesses of the end portions 22 may be greater than the thickness of the center portion 21. In this case, the thickness of the end portion 22 is, for example, 105% to 120% of the thickness of the center portion 21. Thus, separation of the sound damper 10 from the end portion in the tire axial direction is further inhibited.

Although the pneumatic tire according to embodiments of the present invention has been described above in detail, the present invention is not limited to the above-described specific embodiments, and various modifications can be made to implement the present invention.

[Examples]

Pneumatic tires having the basic structure shown in FIG. 1 and the size of 215/55R17 were manufactured based on the specifications indicated in Tables 1 to 2. As comparative examples 1 to 5, pneumatic tires that did not satisfy expression (1) were produced as test tires. The tires of the comparative examples were substantially the same as the tires of the examples except for the above-described structure. In comparative examples 1 to 5 and each of the examples, the width W1 of the sound damper in the tire axial direction was about 90% of the distance h1 in the tire radial direction from the bead base line to the maximum width position at the inner cavity surface of the sidewall portion. For these test tires, separation resistance of the sound damper was tested. The specifications common to the test tires and a test method were as follows.

Rim on which the tire was mounted: $17 \times 7.5$J

Tire internal pressure: 250 kPa

Distance h1 in the tire radial direction from the bead base line to the maximum width position=62.7 mm

Width W1 of the sound damper in the tire axial direction=56.4 mm

Width W2 of the fixing layer in the tire axial direction=56.4 mm

Width W3 of the belt layer in the tire axial direction=164.7 mm

Area of the outer peripheral surface of the sound damper=109810. 8 mm$^2$

<Separation resistance of sound damper>

Running with each test tire was performed under a constant vertical load at a constant speed on a drum tester having a plurality of projections on the tire traveling surface, and a running distance was measured until the sound damper was separated. The results are indicated as indexes with the running distance in comparative example 1 being 100. The greater the value is, the more excellent durability of the sound damper is.

Test results are indicated in Tables 1 to 2.

[Table 1]

|  | Comp. Ex. 1 | Comp. Ex. 2 | Comp. Ex. 3 | Comp. Ex. 4 | Comp. Ex. 5 | Ex. 1 | Ex. 2 | Ex. 3 |
|---|---|---|---|---|---|---|---|---|
| Hardness Ga (Pa) of sound damper | $5.0 \times 10^5$ | $1.0 \times 10^5$ | $3.0 \times 10^7$ | $2.0 \times 10^4$ | $5.0 \times 10^7$ | $3.0 \times 10^3$ | $7.0 \times 10^4$ | $9.0 \times 10^5$ |
| Hardness Gb (Pa) of fixing layer | $4.0 \times 10^4$ | $1.0 \times 10^7$ | $3.0 \times 10^5$ | $2.0 \times 10^7$ | $5.0 \times 10^4$ | $3.0 \times 10^3$ | $7.0 \times 10^4$ | $9.0 \times 10^5$ |
| \|(Ga-Gb)/Ga+(Gb-Gb)\| | 10.58 | 98.01 | 98.01 | 998.00 | 998.00 | 0.00 | 0.00 | 0.00 |
| Separation resistance (index) of sound damper | 100 | 80 | 80 | 40 | 40 | 250 | 250 | 250 |

[Table 2]

|  | Ex. 4 | Ex. 5 | Ex. 6 | Ex. 7 | Ex. 8 | Ex. 9 | Ex. 10 |
|---|---|---|---|---|---|---|---|
| Hardness Ga (Pa) of sound damper | $1.0 \times 10^4$ | $3.0 \times 10^5$ | $1.0 \times 10^6$ | $3.5 \times 10^5$ | $2.0 \times 10^4$ | $5.0 \times 10^5$ | $1.0 \times 10^4$ |
| Hardness Gb (Pa) of fixing layer | $2.0 \times 10^4$ | $1.0 \times 10^5$ | $1.5 \times 10^6$ | $7.0 \times 10^4$ | $8.0 \times 10^4$ | $1.5 \times 10^6$ | $1.0 \times 10^5$ |
| \|(Ga-Gb)/Ga+(Gb-Ga)/Gb\| | 0.50 | 1.33 | 0.17 | 3.20 | 2.25 | 1.33 | 8.10 |
| Separation resistance (index) of sound damper | 200 | 170 | 230 | 130 | 150 | 170 | 110 |

As indicated in Tables 1 to 2, it was confirmed that the tires of the examples each inhibited separation of the sound damper from the tire inner cavity surface over a long time period.

**Claims**

1. A pneumatic tire (1) comprising

   a tire inner cavity surface (1i), wherein
   a porous sound damper (10) is fixed to the tire inner cavity surface (1i) via a fixing layer (11),
   wherein the sound damper (10) is fixed to the tread portion (2), and
   the width W1 of the sound damper (10) in the tire axial direction is less than a distance h1 in the tire radial direction from a bead base line to a maximum width position at an inner cavity surface of a sidewall portion (3) in a normal state in which the tire (1) is mounted on a normal rim and is inflated to a normal internal pressure and no load is applied to the tire (1),
   the tire being **characterised in that**
   the width W1 is not less than 70% of the distance h1 in the tire radial direction, and
   a hardness Ga of the sound damper (10) and a hardness Gb of the fixing layer (11) are measured in Pascal, Pa, as specified in JIS K7244 and in the description, wherein the hardness Ga and the hardness Gb each represents a storage modulus of each component, and wherein the hardness Ga and the hardness Gb satisfy the following expression (1)

   $$|(Ga-Gb)/Ga+(Gb-Ga)/Gb| \leq 10 \ldots (1).$$

2. The pneumatic tire (1) according to claim 1, wherein the following expression (2) is satisfied:

   $$|(Ga-Gb)/Ga+(Gb-Ga)/Gb| \leq 5 \ldots (2)$$

3. The pneumatic tire (1) according to claim 1, wherein the following expression (3) is satisfied:

   $$|(Ga-Gb)/Ga+(Gb-Ga)/Gb| \leq 1 \ldots (3)$$

   $$|(Ga-Gb)/Ga+(Gb-Ga)/Gb| \leq 1 \ldots (3).$$

4. The pneumatic tire (1) according to any one of claims 1 to 3, wherein

   the sound damper (10) has a width W1 in a tire axial direction, and
   the width W1/the hardness Gb is not less than $1.1 \times 10^{-4}$ mm/PaNm$^2$.

5. The pneumatic tire (1) according to claim 4, wherein the width W1/the hardness Gb is not less than $1.5 \times 10^{-4}$ mm/PaNm$^2$.

6. The pneumatic tire (1) according to any one of claims 1 to 5, wherein

   the fixing layer (11) has a width W2 in the tire axial direction, and
   the width W2/the hardness Ga is not less than $1.1 \times 10^{-4}$ mm/PaNm$^2$.

7. The pneumatic tire (1) according to claim 6, wherein the width W2/the hardness Ga is not less than $1.5 \times 10^{-4}$ mm/PaNm$^2$.

8. The pneumatic tire (1) according to any one of claims 1 to 7, wherein the hardness Ga (Pa (Nm$^2$)) is higher than the hardness Gb PaNm$^2$.

9. The pneumatic tire (1) according to any one of claims 1 to 7, wherein a difference between the hardness Ga and the hardness Gb is less than $1.0 \times 10^4$ PaNm$^2$.

10. The pneumatic tire (1) according to any one of claims 1 to 9, wherein an outer peripheral surface (10o) of the sound damper (10) in a tire radial direction includes a first portion (16) that is fixed to the tire inner cavity surface (1i) via the fixing layer (11) and a second portion (17) that is not fixed to the tire inner cavity surface (1i).

11. The pneumatic tire (1) according to claim 10, wherein a total area S1 of the first portion (16) is less than a total area S2 of the second portion (17).

12. The pneumatic tire (1) according to claim 10 or 11, wherein the total area S1 of the first portion (16)/the hardness Gb is not less than 0.3 mm$^2$/PaNm$^2$.

13. The pneumatic tire (1) according to any one of claims 1 to 12, wherein the fixing layer (11) includes a center portion in the tire axial direction, and an end portion, in the tire axial direction, having a thickness greater than the center portion.

14. The pneumatic tire (1) according to any one of claims 1 to 13, wherein

a belt layer (7) is disposed in a tread portion (2), and
an outer end of the fixing layer (11) in the tire axial direction is disposed tire-axially inward of an outer end of the belt layer (7) in the tire axial direction.

15. The pneumatic tire (1) according to claim 14, wherein

the fixing layer (11) has the width W2 in the tire axial direction,
the belt layer (7) has a width W3 in the tire axial direction, and
the width W2, the width W3, and the hardness Ga satisfy the following expression (4):

$$(W3-W2)/Ga < 1.0 \times 10^{-4} \text{ mm/PaNm}^2 \text{ (4)} \qquad .$$

**Patentansprüche**

1. Luftreifen (1), umfassend

eine Reifeninnenhohlraumfläche (1i), wobei
ein poröser Schalldämpfer (10) über eine Befestigungsschicht (11) an der Reifeninnenhohlraumfläche (1i) befestigt ist,
wobei der Schalldämpfer (10) an dem Laufflächenabschnitt (2) befestigt ist, und
die Breite W1 des Schalldämpfers (10) in der Reifenaxialrichtung geringer ist als ein Abstand h1 in der Reifenradialrichtung von einer Wulstbasislinie zu einer Position maximaler Breite an einer Innenhohlraumfläche eines Seitenwandabschnitts (3) in einem normalen Zustand, in dem der Reifen (1) auf eine normale Felge aufgezogen ist und auf einen normalen Innendruck aufgepumpt ist und keine Last auf den Reifen (1) ausgeübt ist,
wobei der Reifen **dadurch gekennzeichnet ist, dass**
die Breite W1 nicht weniger als 70 % des Abstands h1 in der Reifenradialrichtung beträgt, und
eine Härte Ga des Schalldämpfers (10) und eine Härte Gb der Befestigungsschicht (11) in Pascal, Pa, gemessen sind, wie in JIS K7244 und in der Beschreibung angegeben,
wobei die Härte Ga und die Härte Gb jeweils einen Speichermodul jeder Komponente darstellen, und wobei die Härte Ga und die Härte Gb den folgenden Ausdruck (1) erfüllen

$$|(Ga-Gb)/Ga+(Gb-Ga)/Gb| \leq 10...(1).$$

2. Luftreifen (1) nach Anspruch 1, wobei der folgende Ausdruck (2) erfüllt ist:

$$|(Ga-Gb)/Ga+(Gb-Ga)/Gb| \leq 5...(2).$$

3. Luftreifen (1) nach Anspruch 1, wobei der folgende Ausdruck (3) erfüllt ist:

$$|(Ga-Gb)/Ga+(Gb-Ga)/Gb| \leq 1...(3).$$

4. Luftreifen (1) nach einem der Ansprüche 1 bis 3, wobei

der Schalldämpfer (10) eine Breite W1 in einer Reifenaxialrichtung aufweist, und
die Breite W1/die Härte Gb nicht weniger als $1,1 \times 10^{-4}$ mm/PaNm$^2$ beträgt.

5. Luftreifen (1) nach Anspruch 4, wobei die Breite W1/die Härte Gb nicht weniger als $1,5 \times 10^{-4}$ mm/PaNm$^2$ beträgt.

6. Luftreifen (1) nach einem der Ansprüche 1 bis 5, wobei

   die Befestigungsschicht (11) eine Breite W2 in der Reifenaxialrichtung aufweist, und
   die Breite W2/die Härte Ga nicht weniger als $1,1 \times 10^{-4}$ mm/PaNm$^2$ beträgt.

7. Luftreifen (1) nach Anspruch 6, wobei die Breite W2/die Härte Ga nicht weniger als $1,5 \times 10^{-4}$ mm/PaNm$^2$ beträgt.

8. Luftreifen (1) nach einem der Ansprüche 1 bis 7, wobei die Härte Ga ($Pa(Nm^2)$) höher als die Härte Gb PaNm$^2$ ist.

9. Luftreifen (1) nach einem der Ansprüche 1 bis 7, wobei eine Differenz zwischen der Härte Ga und der Härte Gb weniger als $1,0 \times 10^4$ PaNm$^2$ beträgt.

10. Luftreifen (1) nach einem der Ansprüche 1 bis 9, wobei eine Außenumfangsfläche (10o) des Schalldämpfers (10) in einer Reifenradialrichtung einen ersten Abschnitt (16), der über die Befestigungsschicht (11) an der Reifeninnenhohlraumfläche (1i) befestigt ist, und einen zweiten Abschnitt (17), der nicht an der Reifeninnenhohlraumfläche (1i) befestigt ist, umfasst.

11. Luftreifen (1) nach Anspruch 10, wobei eine Gesamtfläche S1 des ersten Abschnitts (16) kleiner als eine Gesamtfläche S2 des zweiten Abschnitts (17) ist.

12. Luftreifen (1) nach Anspruch 10 oder 11, wobei die Gesamtfläche S1 des ersten Abschnitts (16)/die Härte Gb nicht weniger als $0,3$ mm$^2$/PaNm$^2$ beträgt.

13. Luftreifen (1) nach einem der Ansprüche 1 bis 12, wobei die Befestigungsschicht (11) einen Mittelabschnitt in der Reifenaxialrichtung und einen Endabschnitt in der Reifenaxialrichtung mit einer größeren Dicke als der Mittelabschnitt umfasst.

14. Luftreifen (1) nach einem der Ansprüche 1 bis 13, wobei

    eine Gürtelschicht (7) in einem Laufflächenabschnitt (2) angeordnet ist, und
    ein äußeres Ende der Befestigungsschicht (11) in der Reifenaxialrichtung reifenaxial innen von einem äußeren Ende der Gürtelschicht (7) in der Reifenaxialrichtung angeordnet ist.

15. Luftreifen (1) nach Anspruch 14, wobei

    die Befestigungsschicht (11) die Breite W2 in der Reifenaxialrichtung aufweist,
    die Gürtelschicht (7) eine Breite W3 in der Reifenaxialrichtung aufweist, und
    die Breite W2, die Breite W3 und die Härte Ga den folgenden Ausdruck (4) erfüllen:

$$(W3-W2)/Ga < 1,0 \times 10^{-4} \text{ mm/PaNm}^2 \quad (4).$$

## Revendications

1. Bandage pneumatique (1) comprenant

   une surface de cavité intérieure de pneumatique (1i), dans lequel
   un amortisseur sonore poreux (10) est fixé sur la surface de cavité intérieure du pneumatique (1i) via une couche de fixation (11),
   dans lequel l'amortisseur sonore (10) est fixé sur la portion formant bande de roulement (2), et
   la largeur W1 de l'amortisseur sonore (10) dans la direction axiale du pneumatique est inférieure à une distance h1 dans la direction radiale du pneumatique depuis une ligne de base de talon jusqu'à une position de largeur maximum au niveau d'une surface de cavité intérieure d'une portion formant paroi latérale (3) dans un état normal dans lequel le pneumatique (1) est monté sur une jante normale et est gonflé à une pression interne normale et où aucune charge n'est appliquée sur le pneumatique (1),

le pneumatique est **caractérisé en ce que**

la largeur W1 n'est pas inférieure à 70 % de la distance h1 dans la direction radiale du pneumatique, et une dureté Ga de l'amortisseur sonore (10) et une dureté Gb de la couche de fixation (11) sont mesurées en Pascal, Pa, comme spécifié dans la norme industrielle japonaise JIS K7244 et dans la description, la dureté Ga et la dureté Gb représentant chacune un module de stockage de chaque composant, et la dureté Ga et la dureté Gb satisfont à l'expression (1) suivante :

$$|(Ga-Gb)/Ga+(Gb-Ga)/Gb| \leq 10 \quad (1).$$

**2.** Bandage pneumatique (1) selon la revendication 1, dans lequel l'expression (2) suivante est satisfaite :

$$|(Ga-Gb)/Ga+(Gb-Ga)/Gb| \leq 5 \quad (2).$$

**3.** Bandage pneumatique (1) selon la revendication 1, dans lequel l'expression (3) suivante est satisfaite :

$$|(Ga-Gb)/Ga+(Gb-Ga)/Gb| \leq 1 \quad (3).$$

**4.** Bandage pneumatique (1) selon l'une quelconque des revendications 1 à 3, dans lequel

l'amortisseur sonore (10) a une largeur W1 dans une direction axiale du pneumatique, et
le quotient largeur W1 / dureté Gb n'est pas inférieur à $1,1 \times 10^{-4}$ mm/PaNm$^2$.

**5.** Bandage pneumatique (1) selon la revendication 4, dans lequel le quotient largeur W1 / dureté Gb n'est pas inférieur à $1,5 \times 10^{-4}$ mm/PaNm$^2$.

**6.** Bandage pneumatique (1) selon l'une quelconque des revendications 1 à 5, dans lequel

la couche de fixation (11) a une largeur W2 dans la direction axiale du pneumatique, et
le quotient largeur W2 / dureté Ga n'est pas inférieur à $1,1 \times 10^{-4}$ mm/PaNm$^2$.

**7.** Bandage pneumatique (1) selon la revendication 6, dans lequel le quotient largeur W2 / dureté Ga n'est pas inférieur à $1,5 \times 10^{-4}$ mm/PaNm$^2$.

**8.** Bandage pneumatique (1) selon l'une quelconque des revendications 1 à 7, dans lequel la dureté Ga (Pa (Nm$^2$)) est supérieure à la dureté Gb PaNm$^2$.

**9.** Bandage pneumatique (1) selon l'une quelconque des revendications 1 à 7, dans lequel une différence entre la dureté Ga et la dureté Gb est inférieure à $1,0 \times 10^4$ PaNm$^2$.

**10.** Bandage pneumatique (1) selon l'une quelconque des revendications 1 à 9, dans lequel une surface périphérique extérieure (10o) de l'amortisseur sonore (10) dans une direction radiale du pneumatique inclut une première portion (16) qui est fixée sur la surface de cavité intérieure du pneumatique (1i) via la couche de fixation (11) et une seconde portion (17) qui n'est pas fixée sur la surface de cavité intérieure du pneumatique (1i).

**11.** Bandage pneumatique (1) selon la revendication 10, dans lequel une aire totale S1 de la première portion (16) est inférieure à une aire totale S2 de la seconde portion (17).

**12.** Bandage pneumatique (1) selon la revendication 10 ou 11, dans lequel le quotient aire totale S1 de la première portion (16) / dureté Gb n'est pas inférieur à 0,3 mm$^2$/PaNm$^2$.

**13.** Bandage pneumatique (1) selon l'une quelconque des revendications 1 à 12, dans lequel la couche de fixation (11) inclut une portion centrale dans la direction axiale du pneumatique, et une portion terminale, dans la direction axiale du pneumatique, ayant une épaisseur supérieure à la portion centrale.

**14.** Bandage pneumatique (1) selon l'une quelconque des revendications 1 à 13, dans lequel

une couche de ceinture (7) est disposée dans une portion formant bande de roulement (2), et
une extrémité extérieure de la couche de fixation (11) dans la direction axiale du pneumatique est disposée à l'intérieur, dans la direction axiale du pneumatique, d'une extrémité extérieure de la couche de ceinture (7) dans la direction axiale du pneumatique.

**15.** Bandage pneumatique (1) selon la revendication 14, dans lequel la couche de fixation (11) a la largeur W2 dans la direction axiale du pneumatique,

la couche de ceinture (7) a une largeur W3 dans la direction axiale du pneumatique, et
la largeur W2, la largeur W3, et la dureté Ga satisfont à l'expression (4) suivante :

$$(W3-W2)/Ga < 1,0 \times 10^{-4} \ mm/PaNm^2 \qquad (4).$$

## Fig. 1

Fig. 2

Fig. 3

**EP 4 079 546 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019142503 A
- EP 3659819 A1
- EP 3321108 A1
- JP 2021046127 A